# EUROPÄISCHE PATENTSCHRIFT

(11) **EP 1 559 669 B1**
(45) Veröffentlichungstag und Bekanntmachung des Hinweises auf die Patenterteilung: **05.12.2007**
(21) Anmeldenummer: 04090025.0
(22) Anmeldetag: 28.01.2004
(51) Int. Cl.: B65G 47/71, B65G 47/53, B65H 29/16

(54) **Verfahren und Anordnung sowie Vorrichtung zum Quertransport von Riesen**
Method, arrangement and device for the transverse transport of reams
Procédé, système et dispositif pour le transport transversal de ramettes

(43) Veröffentlichungstag der Anmeldung: 03.08.2005
(73) Patentinhaber: E.C.H. Will GmbH, D-22529 Hamburg (DE)
(72) Erfinder: Höpner, Bernd, 25421 Pinneberg (DE); Wolf, Wolfram, 25485 Bilsen (DE)
(74) Vertreter: Wenzel & Kalkoff

(56) Entgegenhaltungen:
- DE-U- 29 705 548
- US-B1- 6 343 685

## Beschreibung

Die Erfindung betrifft ein Verfahren zum Fördern von Gegenständen von einem Fördermittel an mindestens zwei Vorrichtungen zum Weiterverarbeiten der Gegenstände gemäß dem Oberbegriff des Anspruchs 1. Des weiteren betrifft die Erfindung eine Anordnung zum Fördern von Gegenständen von einer Produktionsmaschine an Vorrichtungen zur Weiterverarbeitung der Gegenstände gemäß dem Oberbegriff des Anspruchs 6 sowie eine Vorrichtung zum Fördern von Gegenständen quer zu ihrer Antransportrichtung gemäß dem Oberbegriff des Anspruchs 11.

Derartige bekannte Verfahren, Anordnungen und Vorrichtungen dienen z.B. in der Papierindustrie zum Transport von gestapelten Blättern, Bögen oder dergleichen aus Pappe, Papier, Kunststoff oder anderen stapelfähigen Materialien aus einer einer Produktionsmaschine nachgeordneten Sammelstation zu Packmaschinen oder dergleichen.

Innerhalb einer üblicherweise mehrnutzigen Produktionsmaschine werden durch Längsund/oder Querschneiden von Materialbahnen, z.B. Papierbahnen, kontinuierlich sogenannte Papierriese in Form von Blattlagen oder Blattstapeln gebildet. Mehrere eng nebeneinander liegende Papierriese bilden eine Riesreihe, die im folgenden auch als Riesstrang bezeichnet wird. Dieser Riesstrang wird in einer Sammelstation abgelegt. Mittels geeigneter Mittel, zweckmäßigerweise einem Zangensystem, wird der Riesstrang auf eine Vorrichtung zum Fördern der Riese quer zu ihrer Antransportrichtung gezogen bzw. auf dieser abgesetzt. Ein Riesstrang besteht mindestes aus zwei Riesen, ist jedoch auf ein Vielfaches erweiterbar. Jeder Riesstrang wird in der Regel jedoch weiterverarbeitet, nämlich vorzugsweise verpackt. Die einzelnen Vorrichtungen, z.B. die Produktionsmaschine und die Packmaschinen sind daher mit ihren jeweiligen Leistungsfähigkeiten aufeinander abgestimmt. Üblicherweise produziert z.B. eine 14-nutzige Produktionsmaschine mehr Riese, als eine einzelne Packmaschine abnehmen kann. Um die Produktivität solcher Produktlinien zu erhöhen, also die Abnahme an die Produktion anzupassen, sind vorzugsweise zu beiden Seiten der Produktionsmaschine bzw. der Sammelstation Packmaschinen angeordnet. Im Regelfall werden beide Packmaschinen gleichmäßig mit Riesen versorgt.

Für eine sinnvolle und insbesondere auftragsabhängige Zuführung der Riese an die beiden Packmaschinen wird der Riesstrang geteilt. Das Teilen des Riesstranges kann durch unterschiedliche Ausbildungen des Fördermittels erreicht werden. Durch die Aufteilung des Riesstrangs wird ein erster Teilstrang an eine erste Packmaschine und ein zweiter Teilstrang an die zweite Packmaschine geführt, wobei die Packmaschinen vorzugsweise auf entgegengesetzten Seiten des Fördermittels angeordnet sind. Dadurch wird zum einen erreicht, daß unterschiedliche Aufträge, z.B. wird ein Teil der Riese in blaues Umschlagpapier eingepackt, während ein anderer Teil in rotes Umschlagpapier eingepackt wird, parallel abgearbeitet werden können. Zum anderen werden die Riese zügig aus der Produktionsmaschine bzw. dem Fördermittel gerührt.

Bei bekannten Verfahren und Anordnungen wird die Aufteilung des Strangs mittels manueller Einstellungen am Fördermittel vorgenommen. Die Einstellung kann jedoch nur bei Maschinenstillstand erfolgen und wird üblicherweise vor dem Start der jeweiligen Aufträge vorgenommen. Die bekannten Verfahren weisen den Nachteil auf, daß durch den Maschinenstillstand die Leistungsfähigkeit der gesamten Anordnung sinkt. Außerdem sind Störungen bzw. Ausfälle einzelner Komponenten, beispielsweise einer Packmaschine nur teilweise wieder auszugleichen. Das bedeutet, daß die einer Packmaschine durch Störung entgangene Produktionsmenge nachträglich nur begrenzt ausgeglichen werden kann. Dies führt aber dazu, daß der Auftrag für eine Packmaschine erfüllt sein kann, während die andere Packmaschine noch ihren Auftrag abarbeitet, so daß die Packmaschinen zu unterschiedlichen Zeiten ihre Aufträge erfüllt haben.

Es sind weiterhin Vorrichtungen bekannt, bei denen in einem Beispielsfall, in dem ein Riesstrang aus vierzehn Riesen gebildet ist, also z.B. aus vierzehn Nutzen gebildete Stapel mit 500 Blatt Papier des Formats DIN A4 umfaßt, der Riesstrang gleichmäßig aufgeteilt wird, so daß die Vorrichtung zum Fördern der Riese quer zu ihrer Antransportrichtung zu beiden Seiten jeweils sieben Riese abtransportiert. Hierzu ist die bekannte Vorrichtung im Bereich einer Trennfuge geteilt, so daß eine Förderung einer Anzahl von Riesen zu jeder Seite gewährleistet ist. Diese Trennfuge ist verschiebbar, um eine ungleiche Belieferung der zu beiden Seiten angeordneten Packmaschinen zu ermöglichen, z.B. für den Fall, daß eine der Packmaschinen wegen eines Defektes einen Stillstand aufweist oder weil die Packmaschinen unterschiedlich ausgelastet werden sollen. Derartige Vorrichtungen weisen jedoch den Nachteil auf, daß konstruktionsbedingt nur ein kleiner Verfahrweg zu Verfügung steht, so daß die Aufteilung der Riese eines Riesstrangs nur in begrenztem Umfang möglich ist.

In einer anderen bekannten Vorrichtung der gattungsgemäßen Art, z.B. aus US-B1-6343685, ist eine erste Förderlinie vorgesehen, die zum Abtransport in die eine oder die andere Richtung geeignet ist. Um jedoch eine gleichmäßige Belieferung der zu beiden Seiten der Vorrichtung angeordneten Packmaschinen zu ermöglichen, insbesondere für den Fall, daß die Produktionsmaschine leistungsfähiger ist als eine einzelne Packmaschine, ist eine zusätzliche Vorrichtung erforderlich, mittels der ein kompletter Riesstrang auf eine andere, zweite Förderlinie übertragen werden kann. Diese Vorrichtung ist zum einen konstruktiv sehr aufwendig und weist eine sehr große Bauform in Breite und Länge auf. Zum anderen ist die Teilung eines Riesstrang nicht möglich, so daß der Riesstrang in seiner gesamten Länge entweder zu der einen oder der anderen Seite transportiert werden kann.

Es ist daher eine Aufgabe der vorliegenden Erfindung, ein Verfahren vorzuschlagen, das eine prozeßoptimierte Produktion ermöglicht. Des weiteren ist es Aufgabe der vorliegenden Erfindung, eine Anordnung zu schaffen, die geeignet ist, eine prozeßoptimierte Produktion zu ermöglichen. Eine weitere Aufgabe der Erfindung besteht darin, eine konstruktiv einfache und kompakte Vorrichtung zu schaffen, die einen variablen Abtransport der antransportierten Riesstränge an nachfolgende Packmaschinen gewährleistet.

Diese Aufgabe wird mit dem Verfahren gemäß Anspruch 1 gelöst. Dadurch wird eine gezielte Prozeßoptimierung erreicht, da die Packmaschinen während des Betriebs, also on-line, mit unterschiedlichen Stranglängen beliefert werden können. Fällt z.B. eine Packmaschine kurzzeitig aus, wird in dieser Ausfallzeit die andere Packmaschine mit einer größeren Anzahl von Gegenständen versorgt, um den Auftrag abarbeiten zu können. Sobald die ausgefallene Packmaschine wieder in Betrieb ist, wird der Strang derart aufgeteilt, daß die zuvor ausgefallene Packmaschine mit einer größeren Anzahl von Gegenständen versorgt wird, um das Defizit aufzuholen. Im Endeffekt können dann beide Aufträge zeitgleich abgeschlossen werden.

Des weiteren wird die Aufgabe durch eine Anordnung gemäß Anspruch 6 gelöst. Mit dieser Anordnung ist eine individuelle Verteilung bzw. Aufteilung des Strangs gewährleistet, so daß Aufträge unabhängig von Störungen oder dergleichen zeitgleich beendet werden können. Des weiteren ermöglicht die erfindungsgemäße Ausbildung eine sehr genaue Steuerung der Packmaschinen, so daß auch unterschiedliche Auftragsgrößen an den beiden Packmaschinen prozeßoptimiert durchführbar sind.

Die Aufgabe wird mit der Vorrichtung gemäß Anspruch 11 gelöst. Dadurch ist auf besonders einfache und leicht handhabbare Weise die beliebige Aufteilung eines abzutransportierenden Riesstrangs möglich. Die unabhängig voneinander antreibbaren Fördermittel stellen sicher, daß ein zeitgleicher Abtransport der Gegenstände in beide Abtransportrichtungen erfolgen kann. Durch den partiell bzw. abschnittsweise vorgesehenen Kontakt der Fördermittel mit den Gegenständen ist eine beliebige Aufteilung der Riesstrangs möglich. Am Beispiel des Riesstrangs aus zehn Riesen bedeutet das, daß z.B. ein Ries nach rechts und neun Riese nach links gleichzeitig abtransportiert werden können, indem eines der Fördermittel mit neun Riesen in Kontakt gebracht wird und das andere Fördermittel nur mit einem. Dadurch, daß die Fördermittel unabhängig voneinander antreibbar sind, kann das eine Fördermittel nach links angetrieben werden, während das andere Fördermittel nach rechts angetrieben wird. Durch die Erfindung ist es dadurch erstmals möglich, Packmaschinen individuell nach Auslastung, spezifischem Auftrag, Verfügbarkeit oder dergleichen mit Gegenständen zu versorgen.

Vorteilhafterweise sind unterhalb des Transportbereichs der Förderelemente Kontaktelemente zum Anheben der Förderelemente nach oben aus der Transportebene heraus angeordnet. Dadurch ist die Herstellung einer gezielten und partiellen Wirkverbindung zwischen den Förderelementen und den Gegenständen besonders einfach möglich.

In einer weiteren bevorzugten Ausführungsform der Erfindung sind die Förderelemente segmentiert, wobei die Anzahl der Segmente im Transportbereich der Fördermittel bzw. der Förderelemente mindestens der Anzahl der zu transportierenden Gegenstände entspricht. Die Segmentierung ist eine rein imaginäre Aufteilung des Transportbereichs. Das bedeutet, daß die Fördermittel bzw. die Förderelemente derart ausgebildet sind, daß sie an mindestens zehn Positionen aus der Transportebene heraus bewegbar sind. Mit anderen Worten müssen mindestens zehn Mittel zum Anheben der Förderelemente vorgesehen sein. Dies ermöglicht die gezielte Herstellung einer Wirkverbindung zwischen den Fördermitteln und den Gegenständen.

Vorzugsweise sind jedem Segment bzw. jedem Gegenstand eines Strangs mehrere, vorzugsweise vier Kontaktelement zugeordnet. Damit ist eine optimale und exakte Ansteuerung der Förderelemente gewährleistet, so daß die Förderelemente auch nur an genau den gewünschten Positionen angehoben werden. Das Anheben der Förderelemente in einem Segment, also unter einem Gegenstand, läßt die benachbarten Gegenstände unbeeinflußt.

Weitere vorteilhafte und bevorzugte Merkmale und Ausführungsformen der Anordnung und der Vorrichtung sowie vorteilhafte Verfahrensschritte ergeben sich aus den Unteransprüchen und der Beschreibung. Eine besonders bevorzugte Ausführungsform einer Vorrichtung wird ebenso wie das Grundprinzip des Verfahrens anhand der Zeichnung näher erläutert. In der Zeichnung zeigt:
- Fig. 1: eine Draufsicht auf die Vorrichtung mit sechs auf dem Auflageelement bzw. den Fördermitteln abgelegten Papierriesen,
- Fig. 2: eine Vorderansicht eines Ausschnitts der Vorrichtung, nämlich zwei sich im Bereich einer Trennfuge einander gegenüberliegende Papierriese, die in Wirkverbindung mit den Förderelementen stehen, und
- Fig. 3: eine Seitenansicht der Vorrichtung gemäß Figur 1 im Schnitt III-III.

Die gezeigte und beschriebene Vorrichtung dient zum Fördern von Stapeln aus Papierbögen oder dergleichen quer zu ihrer Antransportrichtung. Die Vorrichtung ist jedoch auch zum Fördern anderer Gegenstände einsetzbar.

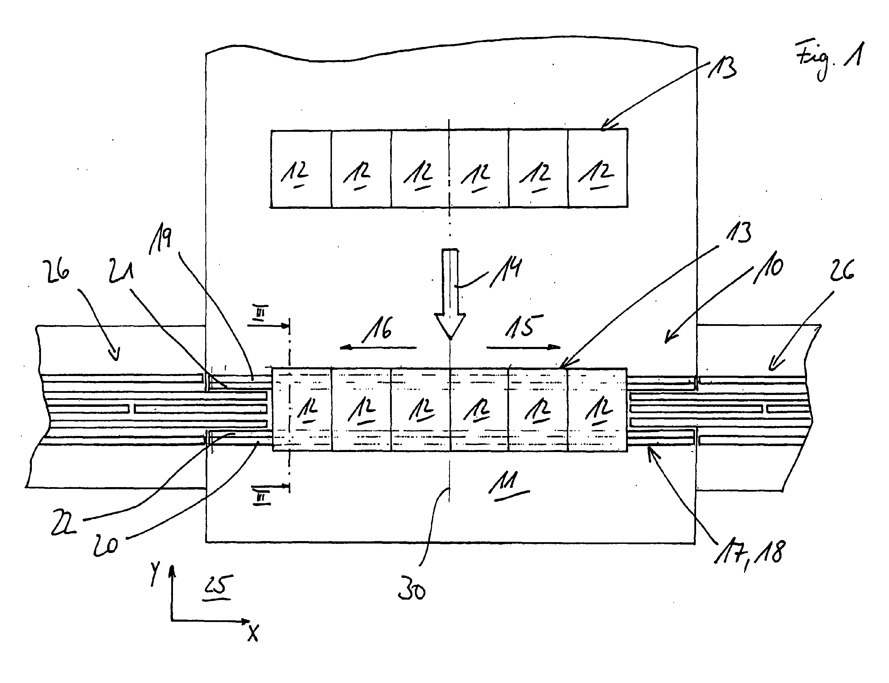

In der Figur 1 ist eine Vorrichtung 10 gezeigt, die als Bindeglied zwischen einer (nicht dargestellten) Produktionsmaschine und zwei (ebenfalls nicht dargestellten) Packmaschinen dient. Die Vorrichtung 10 bildet zusammen mit der Produktionsmaschine sowie den Packmaschinen eine Anordnung.

Die Vorrichtung 10 umfaßt ein Auflageelement 11, das z.B. als sogenannter Lufttisch ausgebildet sein kann. Das Auflageelement 11 dient zur Ablage eines üblicherweise aus mehreren Riesen 12 gebildeten Riesstrangs 13. In der gezeigten Ausführungsform ist der Riesstrang 13 aus sechs Riesen 12 gebildet. Der Riesstrang 13 kann jedoch auch aus einer kleineren oder größeren Anzahl von Riesen 12 gebildet sein.

Die Vorrichtung 10 ist derart ausgebildet, daß die Anzahl der zu transportierenden Riese 12 zu der aus der Antransportrichtung (siehe Pfeil 14 in Figur 1) linken Seite (siehe Pfeil 15) oder rechten Seite (siehe Pfeil 16) variabel ist. Hierzu weist die Vorrichtung 10 zwei Fördermittel 17 und 18 auf. Die Fördermittel 17, 18 sind separat antreibbar, und zwar über (nicht dargestellte) Antriebe. In der Ausführungsform gemäß Figur 1 weist jedes Fördermittel 17, 18 zwei Förderelemente 19, 20 bzw. 21, 22 auf. Die Fördermittel 19, 20 und 21, 22 sind parallel zueinander angeordnet und erstrecken sich nahezu über die gesamte Breite des Auflageelementes 11. Die Förderelemente 19 bis 22 sind als endlose und umlaufende Förderbänder oder dergleichen ausgebildet. Die Förderelemente weisen auf der den Riesen 12 zugewandten (Ober-)Seite einen Transportbereich und auf der den Riesen 12 abgewandten (Unter-)Seite einen Rückführbereich auf.

Der Transportbereich aller Förderelemente 19 bis 22 befindet sich in einer Ausgangsstellung bzw. Ruheposition der Vorrichtung 10 unterhalb der durch das Auflageelement 11 aufgespannten Transportebene 25. Mit anderen Worten sind die Förderelemente 19 bis 22 mit ihrem Transportbereich jeweils vorzugsweise geringfügig tiefer angeordnet als das Auflageelement 11, derart, daß die Riese 12 im Ruhezustand beim Ablegen der Riese 12 bzw. des Riesstrangs 13 auf die Vorrichtung 10 direkt auf dem Auflageelement 11 aufliegen.

Die in beide Richtungen antreibbaren Förderelemente 19 bis 22 verlaufen alle parallel zueinander. In der beschriebenen Ausführungsform sind das Förderelement 19 des Fördermittels 17 und das Förderelement 21 des Fördermittels 18 einerseits und das Förderelement 20 des Fördermittel 17 und das Förderelement 22 des Fördermittels 18 andererseits jeweils paarweise angeordnet, wobei die Paare beabstandet zueinander angeordnet sind. Die Förderelemente 19 und 20 sind außenliegend und die Förderelemente 21, 22 sind innenliegend angeordnet. Jede andere geeignete Anordnung der Förderelemente 19 bis 22 zueinander ist jedoch ebenfalls vorgesehen. So kann z.B. ein Fördermittel zwei Förderelemente aufweisen, während das andere Fördermittel lediglich ein Förderelement aufweist. Vorzugsweise wäre in einem solchen Fall das einzelne Förderelement des einen Fördermittels zwischen den beiden Förderelementen des anderen Fördermittels angeordnet.

Die beiden Förderelemente 19, 20 des Fördermittels 17 bzw. die Förderelemente 21, 22 des Fördermittels 18 sind jeweils mittels eines (nicht dargestellten) Antriebs antreibbar, wobei die Antriebsrichtung variabel ist. Alternativ kann auch jedes Förderelement 19, 20, 21, 22 über einen separaten Antrieb verfügen. In diesem Fall sind die Antriebe dann aber bezogen auf ein Fördermittel 17 bzw. 18 vorzugsweise über geeignete und übliche Mittel synchronisiert, derart, daß die Förderelemente 19, 20 einerseits und die Förderelemente 21, 22 andererseits jeweils in dieselbe Richtung und mit derselben Geschwindigkeit antreibbar bzw. angetrieben sind.

Zur reibungslosen Übergabe der Riese 12 an die nachgeordneten Packmaschinen ragen geeignete Fördermittel 26 mindestens teilweise in den Transportbereich der Fördermittel 17, 18. Die Fördermittel 26 liegen vorzugsweise zwischen den durch die Förderelemente 19 bis 22 gebildeten Paaren und sind in derselben Ebene angeordnet.

Zum Abtransport der Riese 12 vom Auflageelement 11 sind die Förderelemente 19 bis 22 aus der unteren Ruheposition in eine obere Transportposition bringbar. Hierzu ist das Auflageelement 11 geteilt ausgebildet, so daß die Förderelemente 19 bis 22 durch das Auflageelement 11 hindurch bewegbar sind. In der Transportposition sind die Förderelemente 19 bis 22 in Kontakt mit den Riesen 12. Mit anderen Worten liegen die Förderelemente 19 bis 22 in der Transportposition geringfügig oberhalb der Transportebene 25 bzw. des Auflageelementes 11. Um die Förderelemente 19 bis 22 von der Ruheposition in die Transportposition zu bringen, sind unterhalb des Transportbereichs der Förderelemente 19 bis 22 Kontaktelemente 27 angeordnet. Die Kontaktelemente 27 sind senkrecht zur Transportebene 25 auf- und abbewegbar ausgebildet und weisen ein Gleitstück 28 sowie einen Druckzylinder 29 oder dergleichen auf. Die Anzahl der Kontaktelemente 27 ist variabel. Vorzugsweise sind jedoch unterhalb jedes Ries 12 vier Kontaktelemente 27 angeordnet. Jedes dieser vier unterhalb eines Ries 12 angeordneten Kontaktelemente 27 ist einem der Förderelemente 19 bis 22 zugeordnet. Grundsätzlich sind die Kontaktelemente 27 separat ansteuerbar. Vorzugsweise sind jedoch die den Förderelementen 19, 20 des Fördermittels 17 und die den Förderelementen 21, 22 des Fördermittels 18 zugeordneten Kontaktelemente 27 synchron ansteuer- und betätigbar.

Mit den Kontaktelementen 27 sind die Förderelemente 19 bis 22 partiell, also segmentweise, aus der Ebene 25 heraus in Richtung der Riese 12 bewegbar, so daß die Riese 12 in Transportposition nunmehr auf den Förderelementen 19 und 20 bzw. 21 und 22 liegen. Die Förderelemente 19 bis 22 sind hierzu in Segmente oder auch Abschnitte eingeteilt, wobei jeder Abschnitt etwa der Breite eines Gegenstandes entspricht. Die Anzahl der Segmente bzw. Abschnitte entspricht mindestens der Anzahl der abzutransportierenden Gegenstände. In jedem Segment, also unterhalb jedes Gegenstandes sind in Antransportrichtung gemäß Pfeil 14 vier Kontaktelemente 27 hintereinander angeordnet. Üblicherweise befinden sich stets nur zwei demselben Fördermittel 17 oder 18 zugeordnete Kontaktelemente 27 in Transportposition, so daß der Abtransport durch eines Fördermittel 17 oder 18 erfolgt. Zeitgleich sind die anderen beiden Kontaktelemente 27 des Segments in der Ruheposition. Es ist jedoch auch denkbar, daß alle Kontaktelemente 27 eines Segmentes in Transportposition sind. Das setzt allerdings voraus, daß nur eine Abtransportrichtung vorgesehen ist.

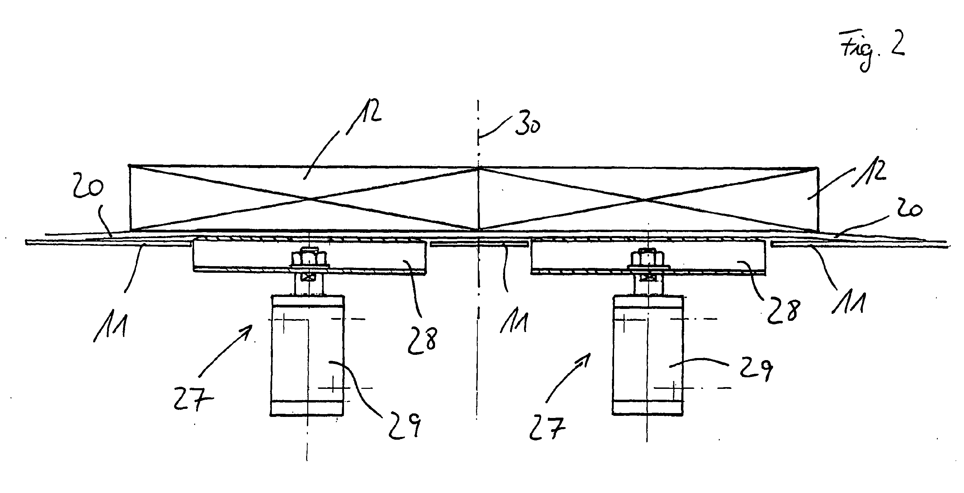

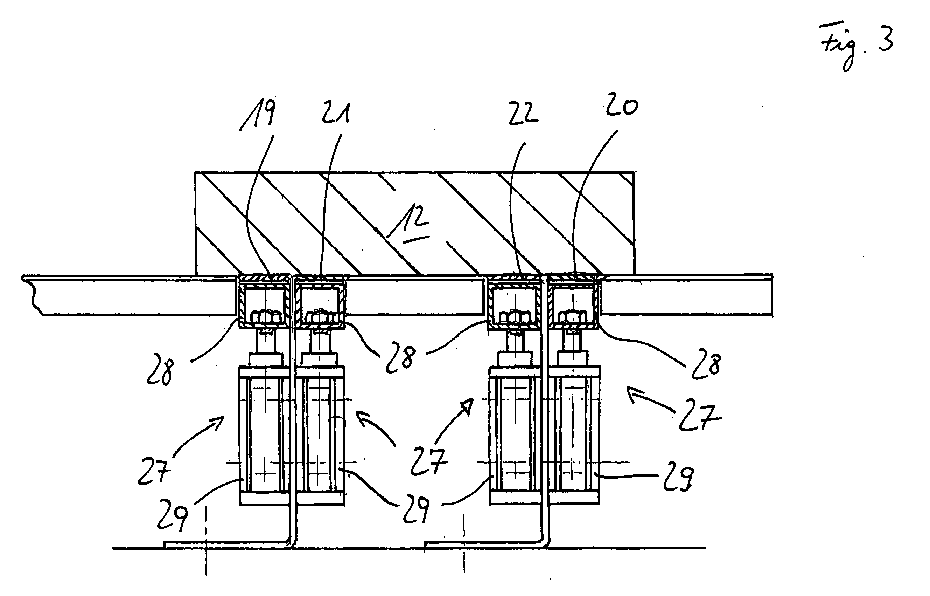

Die Breite der Gleitstücke 28 in x-Richtung ist kleiner als die Breite der Riese 12 in x-Richtung (siehe z.B. Figur 2). Die Länge der Gleitstücke 28 in y-Richtung entspricht maximal der Breite der Förderelemente 19 bis 22 in y-Richtung (siehe z.B. Figur 3). Durch die Auswahl der Dimensionen der Gleitstücke 28 in x- und y-Richtung wird zum einen sichergestellt, daß jedes Gleitstück 28 auch nur mit einem Förderelement 19 bis 22 in Kontakt kommt. Zum anderen wird eine Überlappung der Förderelement 19 bis 22 im Bereich benachbarter Riese 12 verhindert. Mit anderen Worten beeinflußt das Anheben eines Rieses 12durch die darunter befindlichen Kontaktelemente 27 nicht die benachbarten Riese 12.

Die Vorrichtung 10 dient auch zur Querförderung beliebiger anderer Gegenstände und ist nicht auf den Abtransport von Riesen 12 beschränkt. In nicht dargestellten Ausführungsformen kann jedes Fördermittel 17, 18 auch mehr als zwei Förderelemente aufweisen. Die Förderelemente können auch als Zahnriemen oder dergleichen ausgebildet sein. Die Förderelemente können auch nur partiell vorgesehen sein, d.h. sich nur über einen Teil der Breite des Auflageelementes 11 erstrecken.

### Im folgenden werden verschiedene Verfahrensabläufe näher erläutert:

### Funktion ― ausschließlich linksfördernd

Ein Riesstrang 13 wird aus der Produktionsmaschine auf das Auflageelement 11 gelegt. Die Förderelemente 19 bis 22 befinden sich in der Ruheposition, also unterhalb der Transportebene 25. Für den Fall, daß ein einseitiger Abtransport aller Riese 12, nämlich des gesamten Riesstrangs 13 in Richtung des Pfeils 15 nach links erfolgen soll, werden sämtliche Kontaktelemente 27 in Transportposition gebracht, indem die Gleitstücke 28 mittels der Druckzylinder 29 aufwärts bewegt werden, bis die Förderelemente 19 bis 22 aus der Transportebene 25 herausstehen. Dadurch entsteht ein geringer Hub von vorzugsweise ca. 3mm, um den der Riesstrang 13 vom Auflageelement 11 angehoben wird. Nachdem alle Kontaktelemente 27 in allen Segmenten, also unterhalb aller Riese 12, aufwärts in Transportposition bewegt wurden und damit die Förderelemente 19 bis 22 in Wirkverbindung mit den Riesen 12 stehen, erfolgt die Funktion "Riesstrang abräumen", indem die Förderelemente 19 bis 22 gleichgerichtet und mit gleicher Geschwindigkeit nach links in Richtung des Pfeils 15 gestartet werden.

### Funktion - ausschließlich rechtsfördernd

Dieses Funktionsprinzip entspricht identisch dem gerade beschriebenen Funktionsprinzip mit dem Unterschied, daß die Bewegungs- bzw. Abtransportrichtung der Förderelemente 19 bis 22 in Richtung des Pfeils 16 erfolgt.

### Funktion - symmetrische Teilung

Beim symmetrischen Abtransport der Riese 12 wird der Riesstrang 13 im Bereich einer Trennfuge 30 geteilt. Für die nach links in Richtung des Pfeils 15 abzutransportierenden drei Riese 12 (gilt für die gezeigte Ausführungsform) werden nur zwei der vier Kontaktelemente 27 eines Segmentes in Transportposition bewegt, und zwar die den Förderelementen 21 und 22 zugeordneten Kontaktelemente 27. Für die nach rechts in Richtung des Pfeils 16 abzutransportierenden drei Riese 12 werden die den Förderelementen 19 und 20 zugeordneten Kontaktelemente 27 in Transportposition bewegt. Zum Abräumen des Riesstrangs 13 werden die Förderelemente 21 und 22 nun nach links angetrieben, während die Förderelemente 19 und 20 nach rechts angetrieben werden.

### Funktion - asymmetrische Teilung

Die asymmetrische Teilung des Riesstrangs 13 wird anhand einer Teilung 1:5 erläutert. Unterhalb von fünf Riesen 12 werden jeweils zwei Kontaktelemente 27 unterhalb der Förderelemente 21 und 22 aktiviert, d.h. aufwärts bewegt. Unterhalb des einen verbleibenden Rieses 12 werden die Kontaktelemente 27 unterhalb der Förderelemente 19 und 20 aktiviert. Werden nun die Förderelemente 19 und 20 nach rechts in Pfeilrichtung 16 und die Förderelemente 21, 22 nach links in Pfeilrichtung 15 angetrieben, erfolgt der Abtransport des Riesstranges 13 in unterschiedlicher Richtung.

Die Teilung ist völlig variabel und nicht auf die beschriebene beschränkt. Selbst bei einem aus z.B. vierzehn Riesen 12 bestehenden Riesstrang 13 ist eine Teilung von 0:14 bis 14:0 in allen denkbaren Variationen möglich.

Im folgenden wird das Grundprinzip der Steuerung der Aufteilung des Stranges 13 näher erläutert. Die zuvor beschriebene Vorrichtung 10 als Teil der Anordnung ist besonders zur Durchführung des Verfahrens geeignet, weswegen bei der Verfahrensbeschreibung auf die Figuren 1 bis 3 Bezug genommen wird. Es wird jedoch ausdrücklich darauf hingewiesen, daß das Verfahren auch mit anderen üblichen Vorrichtungen, insbesondere Fördermitteln durchgeführt werden kann. Das Verfahren kann durch einzelne, manuell betätigbare Schaltelemente und/oder durch ohnehin der Anordnung zugeordnete Maschinensteuerungen und/oder separate Steuerungssysteme bzw. ―einheiten automatisch gesteuert und/oder geregelt werden.

Eine nicht dargestellte Produktionsmaschine, nämlich ein Formatschneider, stellt mehrere, in der gezeigten Ausführung gemäß Figur 1 sechs Riese 12 her, die den Strang 13 bilden. Der Strang 13 wird durch nicht gezeigte Elemente, vorzugsweise ein Zangenelement oder dergleichen, auf die Vorrichtung 10 zum Transport der Riese 12 an seitlich angeordnete (und nicht dargestellte) Vorrichtungen zur Weiterverarbeitung, nämlich insbesondere Packmaschinen, gefördert und dort taktweise abgelegt. Kunden-, auftrags-, oder bedarfsabhängig wird jeder Strang 13 derart aufgeteilt, so daß jede Packmaschine einen Teilstrang zur Erledigung des Auftrags erhält.

Beispielsweise produziert der Formatschneider sechs Riese 12 aus Papier mit einem Gewicht von 90g pro Bogen. Ein erster Auftrag an einer der Packmaschinen soll ein blaues Packmittel, nämlich eine blaue Umverpackung, und ein anderer Auftrag an der zweiten Packmaschine eine rote Umverpackung erhalten. Die Aufträge für beide Packmaschinen sind gleich groß, nämlich jeweils zweihundert Riese 12. Im störungsfreien Betrieb wird der Strang 13 also üblicherweise symmetrisch geteilt, so daß beide Packmaschinen von jedem Strang 13 jeweils drei Riese 12 zugeführt bekommen. Die Aufträge an beiden Packmaschinen werden dann zeitgleich beendet. Die Aufteilung jedes Strangs 13 kann jedoch Takt für Takt variieren. Für den Fall, daß zum Beispiel die Packmaschine mit der blauen Umverpackung eine Störung aufweist, wird die Aufteilung des Strangs automatisch durch geeignete Steuerungsmittel, beispielsweise ein Produktionssteuerungssystem, während des Betriebs der Produktionsmaschine geändert, und zwar entweder wenn der Strang 11 auf der Vorrichtung 10 liegt oder kurz bevor der Strang 11 auf der Vorrichtung 10 abgelegt wird. Die Steuerung kann durch die Packmaschine selbst oder andere - auch externe - Systeme erfolgen.

Während der Störung der Packmaschine für die blaue Umverpackung werden alle sechs Riese 12 der anderen Packmaschine für die rote Umverpackung zugeführt, u.U. mit einer reduzierten Zuführgeschwindigkeit durch die Produktionsmaschine. Dauert die Störung z.B. vier Takte, erhält die Packmaschine für die rote Umverpackung in dieser Zeit vierundzwanzig Riese 12, während die Packmaschine für die blaue Umverpackung keinen Ries 12 erhält. Sobald die Störung an der Packmaschine für die blaue Umverpackung behoben ist, wird diese wieder in Betrieb genommen. Um den Rückstand bei der Erfüllung des Auftrages aufzuholen, wird die Aufteilung des Stranges 13 wieder on-line geändert. So kann z.B. eine Aufteilung 4:2, also vier Riese 12 an die "blaue" Packmaschine und zwei Riese 12 an die "rote" Packmaschine, gewählt werden.

Dadurch sind beide Packmaschinen stets in Betrieb. Nach weiteren zwölf Takten ist der Rückstand aufgeholt, ohne das die Produktionsmaschine gestoppt werden mußte, so daß die Aufteilung dann wieder on-line auf eine z.B. symmetrische Verteilung umgestellt wird. Die Aufträge sind dann zeitgleich trotz der Störung einer Packmaschine zeitgleich erledigt.

Sollte die Auftragsgröße z.B. ungleich sein, trotzdem jedoch eine zeitgleiche Beendigung erwünscht sein, kann die Aufteilung der Stränge 13 auch von Takt zu Takt variabel sein. Dadurch, daß in jedem Takt die Aufteilung on-line verändert werden kann, ist eine individuelle und riesgenaue Steuerung der Packmaschinen möglich. Dadurch können Unterbrechungen z.B. wegen des Wechsels der Papiersorte minimiert werden, da die zuvor abgearbeiteten Aufträge zeitgleich erledigt werden können. Auch können Packmittelwechsel, also z. der Wechsel der Umverpackung an einer der Packmaschinen kompensiert werden. Das erfindungsgemäße Verfahren ermöglicht demnach die riesgenaue Steuerung der Packmaschinen selbst bei Vorrichtungen, die nur eine begrenzte Abstufung der Aufteilung des Stranges 13 ermöglichen, daß mit jedem Takt eine andere Aufteilung des Stranges 13 gewählt werden kann, was im Endeffekt zu einer quasi stufenlosen Verteilung der Riese 12 an die Packmaschinen führt. Zur Durchführung des erfindungsgemäßen Verfahrens eigenen sich daher alle üblichen und grundsätzlich eine Aufteilung des Stranges 13 gewährleistenden Fördermittel. Dies gilt insbesondere auch für die in der EP 03 090 247, auf die vollumfänglich verwiesen wird, beschriebene Vorrichtung, bei der die geteilte Mitte, also der Strang im Bereich der Trennfuge, on-line verschoben wird, um die Aufteilung automatisch zu variieren.

Die Steuerung selbst ist auf verschiedene Weise zu realisieren. Z.B. können an den Packmaschinen Sensorelemente angeordnet sein, die den jeweiligen Maschinenzustand an das Fördermittel weiterleiten. Im einfachsten Fall kann die Steuerung durch eine Bedienperson durch Betätigung entsprechender Antriebe realisiert sein. Auch ein separates, der Anordnung übergeordnetes Steuerungssystem ist einsetzbar.

## Patentansprüche

1. Verfahren zum Fördern von Gegenständen (12) von einem Fördermittel an mindestens zwei Vorrichtungen zum Weiterverarbeiten der Gegenstände, umfassend die Schritte
- taktweises Zuführen eines aus mehreren nebeneinander angeordneten und in einer Produktionsmaschine hergestellten Gegenständen (12) gebildeten Strangs (13) auf das Fördermittel (17,18),
- Aufteilen des Strangs (13) in mindestens zwei Teilstränge, und
- Abtransportieren der Teilstränge an die Vorrichtungen zur Weiterverarbeitung der Gegenstände durch das Fördermittel (17,18),
**dadurch gekennzeichnet, daß** das Aufteilen des Strangs (13) in die Teilstränge zum Abfördern der Gegenstände an die Vorrichtungen zur Weiterverarbeitung während des laufenden Betriebs der Produktionsmaschine völlig variabel erfolgt und die Teilstränge in einander entgegengesetzter Richtung gleichzeitig abtransportiert werden.

2. Verfahren nach Anspruch 1, **dadurch gekennzeichnet, daß** das Fördermittel wahlweise manuell oder automatisch gesteuert wird, derart, daß die Aufteilung des Stranges (13) für jeden Takt on-line variabel erfolgen kann.

3. Verfahren nach Anspruch 1 oder 2, **dadurch gekennzeichnet, daß** Förderelemente des Fördermittels gesteuert und/oder geregelt werden, so daß einzelne Gegenstände und/oder Teilstränge und/oder der Strang (13) wahlweise an die eine oder andere Vorrichtung zur Weiterverarbeitung, vorzugsweise die eine oder andere Packmaschine gefördert werden.

4. Verfahren nach einem der Ansprüche 1 bis 3, **dadurch gekennzeichnet, daß** die Aufteilung nach Bedarf und/oder Auslastung der Vorrichtungen zum Weiterverarbeiten gesteuert und/oder geregelt wird.

5. Verfahren nach einem der Ansprüche 1 bis 4, **dadurch gekennzeichnet, daß** die Gegenstände und/oder Teilstränge und/oder der Strang (13) quer zu ihrer Antransportrichtung abgefördert werden.

6. Anordnung zum Fördern von Gegenständen (12) von einer Produktionsmaschine an Vorrichtungen zur Weiterverarbeitung der Gegenstände, im wesentlichen umfassend eine Produktionsmaschine zur Herstellung der Gegenstände, ein Fördermittel (17,18) zum Abtransport eines aus den Gegenständen gebildeten Strangs (13) an die Vorrichtungen zur Weiterverarbeitung, sowie mindestens zwei Vorrichtungen zur Weiterverarbeitung der Gegenstände, wobei das Fördermittel (17,18) derart ausgebildet ist, daß der auf dem Fördermittel positionierte Strang (13) teilbar ist, so daß Teilstränge an unterschiedliche Vorrichtungen zur Weiterverarbeitung förderbar sind, **dadurch gekennzeichnet, daß** zusätzlich Mittel zur völlig variabeln Aufteilung des Strangs (13) während des Betriebs der Produktionsmaschine und gleichzeitigem Abtransport der Teilstränge in entgegengesetzter Richtung vorgesehen sind.

7. Anordnung nach Anspruch 6, **dadurch gekennzeichnet, daß** das Mittel als Steuer- und/oder Regelungseinheit derart ausgebildet ist, daß die Aufteilung des Strangs (13) taktweise wahlweise manuell oder automatisch on-line durchführbar ist.

8. Anordnung nach Anspruch 6 oder 7, **dadurch gekennzeichnet, daß** das Mittel integraler Bestandteil der Anordnung ist.

9. Anordnung nach Anspruch 6 oder 7, daß das Mittel ein separates Produktionssteuerungssystem ist.

10. Anordnung nach einem der Ansprüche 6 bis 9, **dadurch gekennzeichnet, daß** das Mittel in Wirkverbindung mit dem Fördermittel steht.

11. Vorrichtung zum Fördern von Gegenständen quer zu ihrer Antransportrichtung (gemäß Pfeil 14), im wesentlichen umfassend ein eine Transportebene (25) aufspannendes Auflageelement (11) zum Ablegen der Gegenstände sowie sich über die gesamte Ablagebreite der Gegenstände erstreckende Fördermittel (17,18) mit einem Transportbereich und einem Rückführbereich zum gleichzeitigen Abtransport der Gegenstände in Abtransportrichtung, wobei das Fördermittel (17,18) in einer Ruheposition unterhalb des Auflageelementes (11) angeordnet ist und lediglich zu Transportzwecken in Kontakt mit den Gegenständen bringbar sind, **dadurch gekennzeichnet, daß** mindestens zwei unabhängig voneinander antreibbare Fördermittel (17, 18) vorgesehen sind, die partiell bzw. abschnittsweise in Kontakt mit den Gegenständen bringbar sind, derart, dass Gegenstände gleichzeitig in entgegengesetzter Richtung (gemäß Pfeil 15 und/oder 16) transportierbar sind.

12. Vorrichtung nach Anspruch 11, **dadurch gekennzeichnet, daß** jedes Fördermittel (17, 18) jeweils mindestens zwei Fördererelemente (19, 20; 21, 22) aufweist, die paarweise antreibbar sind.

13. Vorrichtung nach Anspruch 11 oder 12, **dadurch gekennzeichnet, daß** unterhalb des Transportbereichs (23) der Förderelemente (19 bis 22) Kontaktelemente (27) zum Anheben der Förderelemente (19 bis 22) nach oben aus der Transportebene (25) heraus angeordnet sind.

14. Vorrichtung nach Anspruch 13, **dadurch gekennzeichnet, daß** die Kontaktelemente (27) einzeln ansteuerbar und senkrecht zur Transportebene (25) auf- und abbewegbar sind.

15. Vorrichtung nach einem der Ansprüche 12 bis 14, **dadurch gekennzeichnet, daß** die Förderelemente (19 bis 22) segmentiert sind, wobei die Anzahl der Segmente im Transportbereich (23) mindestens der Anzahl der zu transportierenden Gegenstände entspricht.

16. Vorrichtung nach Anspruch 15, **dadurch gekennzeichnet, daß** jedem Segment mehrere, vorzugsweise vier Kontaktelemente (27) zugeordnet sind.

17. Vorrichtung nach Anspruch 16, **dadurch gekennzeichnet, daß** die vier Kontaktelemente (27) in einem Segment in Antransportrichtung (gemäß Pfeil 14) hintereinander angeordnet sind.

18. Vorrichtung nach Anspruch 16 oder 17, **dadurch gekennzeichnet, daß** jeweils zwei Kontaktelemente (27), die den Förderelementen (19, 20 bzw. 21, 22) eines Fördermittels (17 bzw. 18) in einem Segment zugeordnet sind, synchron ansteuerbar sind.

19. Vorrichtung nach einem der Ansprüche 13 bis 18, **dadurch gekennzeichnet, daß** jedes Kontaktelement (27) ein Gleitstück (28) und einen Druckzylinder (29) zur Auf- und Abbewegung des Gleitstücks (28) aufweist.

20. Vorrichtung nach einem der Ansprüche 12 bis 19, **dadurch gekennzeichnet, daß** die Förderelemente (19, 20; 21, 22) eines Fördermittels (17; 18) beabstandet zueinander angeordnet sind.

21. Vorrichtung nach einem der Ansprüche 12 bis 20, **dadurch gekennzeichnet, daß** jeweils ein Förderelement (19 bzw. 20) des einen Fördermittels (17) und ein Fördermittel (21 bzw. 22) des anderen Fördermittels (18) paarweise angeordnet sind, wobei die paarweise angeordneten Förderelemente (19, 21; 20, 22) beabstandet zueinander angeordnet sind.

22. Vorrichtung nach einem der Ansprüche 12 bis 21, **dadurch gekennzeichnet, daß** alle Förderelemente (19 bis 22) als endlose und umlaufende Förderbänder ausgebildet sind.

23. Vorrichtung nach Anspruch einem der Ansprüche 12 bis 21, **dadurch gekennzeichnet, daß** alle Förderelemente (19 bis 22) als Zahnriemen ausgebildet sind.

## Claims

1. Method for conveying objects (12) from a conveying means to at least two apparatuses for further processing of the objects comprising the steps
- feeding in cycles of a string (13), formed from several objects (12) arranged side by side and produced in a production machine, to the conveying means (17, 18),
- dividing the string (13) into at least two partial strings, and
- removal of the partial strings to the apparatuses for further processing of the objects by the conveying means (17, 18),
**characterized in that** the division of the string (13) into the partial strings for conveying away the objects to the apparatuses for further processing takes place completely variably during continuous operation of the production machine and the partial strings are removed simultaneously in different directions from one another.

2. Method according to claim 1, **characterized in that** the conveying means are controlled optionally manually or automatically in such a way that the division of the string (13) can take place variably on-line for each cycle.

3. Method according to claim 1 or 2, **characterized in that** conveying elements of the conveying means are controlled and/or regulated, so that individual objects and/or partial strings and/or the string (13) are conveyed optionally to one apparatus or the other for further processing, preferably one packing machine or the other.

4. Method according to any one of claims 1 to 3, **characterized in that** the division is controlled and/or regulated according to requirement and/or load of the apparatuses for further processing.

5. Method according to any one of claims 1 to 4, **characterized in that** the objects and/or partial strings and/or the string (13) are conveyed away transversely to their incoming transport direction.

6. Arrangement for conveying objects (12) from a production machine to apparatuses for further processing of the objects, comprising substantially a production machine for producing the objects, a conveying means (17, 18) for removing a string (13) formed from the objects to the apparatuses for further processing and at least two apparatuses for further processing of the objects, the conveying means (17, 18) being constructed in such a way that the string (13) positioned on the conveying means is divisible, so that partial strings can be conveyed to different apparatuses for further processing, **characterized in that** means are additionally provided for dividing the string (13) completely variably during operation of the production machine and simultaneous removal of the partial strings in the opposite direction.

7. Arrangement according to claim 6, **characterized in that** the means is constructed as a control or regulating unit in such a way that the division of the string (13) can be carried out on-line in cycles optionally manually or automatically.

8. Arrangement according to claim 6 or 7, **characterized in that** the means is an integral component of the arrangement.

9. Arrangement according to claim 6 or 7, **characterized in that** the means is a separate production control system.

10. Arrangement according to any one of claims 6 to 9, **characterized in that** the means is in functional connection with the conveying means.

11. Apparatus for conveying objects transversely to their incoming transport direction (according to arrow 14), essentially comprising a support element (11) clamping a transport plane (25) for depositing the objects and conveying means (17, 18) extending over the entire deposit width of the objects with a transport area and a return area for simultaneous removal of the objects in the removal direction, the conveying means (17, 18) being arranged in an idle position underneath the support element (11) and able to be brought into contact with the objects for transport purposes only, **characterized in that** at least two conveying means (17, 18), drivable independently of one another, are provided, which can be brought into contact with the objects partially or in sections in such a way that the objects can be simultaneously transported in the opposition direction (according to arrow 15 and/or 16).

12. Apparatus according to claim 11, **characterized in that** each conveying means (17, 18) has at least two conveying elements (19, 20; 21, 22), respectively, which are drivable in pairs.

13. Apparatus according to claim 11 or 12, **characterized in that** arranged underneath the transport area (23) of the conveying elements (19 to 22) are contact elements (27) for lifting the conveying elements (19 to 22) upwards out of the transport plane (25).

14. Apparatus according to claim 13, **characterized in that** the contact elements (27) are individually triggerable and movable up and down perpendicular to the transport plane (25).

15. Apparatus according to any one of claims 12 to 14, **characterized in that** the conveying elements (19 to 22) are segmented, the number of segments in the transport area (23) corresponding to at least the number of objects to be transported.

16. Apparatus according to claim 15, **characterized in that** several, preferably four, contact elements (27) are allocated to each segment.

17. Apparatus according to claim 16, **characterized in that** the four contact elements (27) are arranged in succession in one segment in the incoming transport direction (according to arrow 14).

18. Apparatus according to claim 16 or 17, **characterized in that** in each case two contact elements (27), allocated to the conveying elements (19, 20 or 21, 22) of one conveying means (17 or 18) in one segment, are triggerable synchronously.

19. Apparatus according to one of claims 13 to 18, **characterized in that** each contact element (27) has a sliding piece (28) and a pressure cylinder (29) for moving the sliding piece (28) up and down.

20. Apparatus according to any one of claims 12 to 19, **characterized in that** the conveying elements (19, 20; 21, 22) of one conveying means (17; 18) are arranged at a distance from one another.

21. Apparatus according to any one of claims 12 to 20, **characterized in that** in each case one conveying element (19 or 20) of one conveying means (17) and one conveying element (21 or 22) of the other conveying means (18) are arranged in pairs, the conveying elements (19, 21; 20, 22) arranged in pairs being arranged at a distance from one another.

22. Apparatus according to any one of claims 12 to 21, **characterized in that** all the conveying elements (19 to 22) are constructed as continuous, circulating conveyor belts.

23. Apparatus according to any one of claims 12 to 21, **characterized in that** all the conveying elements (19 to 22) are constructed as toothed belts.

## Revendications

1. Procédé pour transporter des objets (12) d'un moyen de transport à au moins deux dispositifs de traitement ultérieur des objets, comprenant les étapes de
- amenée cyclique sur le moyen de transport (17, 18), d'une ligne (13) de plusieurs objets (12) disposés côte à côte et fabriqués dans une machine de production,
- division de la ligne (13) en au moins deux lignes partielles, et
- réacheminement, par le moyen de transport (17, 18), des lignes partielles jusqu'aux dispositifs de traitement ultérieur des objets,
**caractérisé en ce que** la division de la ligne (13) en les lignes partielles en vue de l'envoi, par transport, des objets aux dispositifs de traitement ultérieur, se fait, d'une façon totalement variable, pendant le cours du fonctionnement de la machine de production, et les lignes partielles sont réacheminées simultanément dans des sens opposés l'un à l'autre.

2. Procédé selon la revendication 1, **caractérisé en ce que** le moyen de transport est commandé, manuellement ou automatiquement au choix, de telle manière que la division de la ligne (13) puisse, à chaque cycle, se faire en direct, de façon variable.

3. Procédé selon la revendication 1 ou 2, **caractérisé en ce que** des éléments de transport du moyen de transport sont commandés et/ou régulés pour que des objets individuels et/ou des lignes partielles et/ou la ligne (13), soient transportés, au choix, à l'un ou l'autre des dispositifs de traitement ultérieur, de préférence à l'une ou l'autre de machines d'emballage.

4. Procédé selon l'une des revendications 1 à 3, **caractérisé en ce que** la division est commandée et/ou régulée suivant les besoins et/ou la capacité de charge des dispositifs de traitement ultérieur.

5. Procédé selon l'une des revendications 1 à 4, **caractérisé en ce que** les objets et/ou les lignes partielles et/ou la ligne (13) sont réacheminés dans une direction transversale à leur direction de transport d'amenée.

6. Installation pour transporter des objets (12) d'une machine de production à des dispositifs de traitement ultérieur des objets, comprenant essentiellement une machine de production destinée à fabriquer les objets, un moyen de transport (17, 18) destiné à réacheminer une ligne (13) constituée des objets, aux dispositifs de traitement ultérieur, ainsi qu'au moins deux dispositifs de traitement ultérieur des objets, le moyen de transport (17, 18) étant alors conçu de telle manière que la ligne (13), placée sur le moyen de transport, puisse être divisée, afin que des lignes partielles soient transportables à des dispositifs différents de traitement ultérieur, **caractérisée en ce qu'**il est en plus prévu des moyens pour diviser, de façon totalement variable, la ligne (13) pendant le fonctionnement de la machine de production et réacheminer simultanément les lignes partielles dans des sens opposés.

7. Installation selon la revendication 6, **caractérisée en ce que** le moyen est conçu sous forme d'une unité de commande et/ou de régulation, de telle manière que la division de la ligne (13) puisse être cycliquement effectuée en direct, manuellement ou automatiquement au choix.

8. Installation selon la revendication 6 ou 7, **caractérisée en ce que** le moyen fait intégralement partie de l'installation.

9. Installation selon la revendication 6 ou 7, **caractérisée en ce que** le moyen est un système séparé de commande de production.

10. Installation selon l'une des revendications 6 à 9, **caractérisée en ce que** le moyen est placé en relation de coopération avec le moyen de transport.

11. Dispositif pour transporter des objets dans une direction transversale à leur direction de transport d'amenée (selon la flèche 14), comprenant essentiellement un élément de support (11) pour le dépôt des objets, qui sous-tend un plan de transport (25), ainsi que des moyens de transport (17, 18) s'étendant sur la largeur entière de dépôt des objets et présentant une zone d'acheminement et une zone de retour pour le réacheminement simultané des objets dans la direction de réacheminement, le moyen de transport (17, 18) étant, dans une position de repos, disposé au-dessous de l'élément de support (11) et pouvant être mis en contact avec les objets uniquement à des fins d'acheminement de ceux-ci, **caractérisé en ce qu'**il est prévu au moins deux moyens de transport (17, 18) pouvant être entraînés indépendamment l'un de l'autre, qui peuvent être mis partiellement ou par tronçons, en contact avec les objets, de telle manière que des objets puissent être acheminés simultanément dans des sens opposés (selon la flèche 15 et/ou 16).

12. Dispositif selon la revendication 11, **caractérisé en ce que** chaque moyen de transport (17, 18) présente respectivement au moins deux éléments de transport (19, 20 ; 21, 22), qui peuvent être entraînés par paires.

13. Dispositif selon la revendication 11 ou 12, **caractérisé en ce qu'**au-dessous de la zone d'acheminement (23) des éléments de transport (19 à 22) sont disposés des éléments de contact (27) destinés à soulever les éléments de transport (19 à 22) vers le haut, hors du plan de transport (25).

14. Dispositif selon la revendication 13, **caractérisé en ce que** les éléments de contact (27) sont excitables séparément et déplaçables vers le haut et le bas perpendiculairement au plan de transport (25).

15. Dispositif selon l'une des revendications 12 à 14, **caractérisé en ce que** les éléments de transport (19 à 22) sont segmentés, le nombre des segments dans la zone d'acheminement (23) correspondant au moins au nombre des objets à acheminer.

16. Dispositif selon la revendication 15, **caractérisé en ce qu'**à chaque segment sont associés plusieurs, de préférence quatre, éléments de contact (27).

17. Dispositif selon la revendication 16, **caractérisé en ce que** les quatre éléments de contact (27), dans un segment, sont disposés l'un à la suite de l'autre dans la direction de transport d'amenée (selon la flèche 14).

18. Dispositif selon la revendication 16 ou 17, **caractérisé en ce que** deux éléments de contact (27), qui sont respectivement associés aux éléments de transport (19, 20 ou 21, 22) d'un moyen de transport (17 ou 18) dans un segment, sont chaque fois excitables de façon synchrone.

19. Dispositif selon l'une des revendications 13 à 18, **caractérisé en ce que** chaque élément de contact (27) présente une pièce coulissante (28) et un vérin (29) destiné à déplacer vers le haut et vers le bas la pièce coulissante (28).

20. Dispositif selon l'une des revendications 12 à 19, **caractérisé en ce que** les éléments de transport (19, 20 ; 21, 22) d'un moyen de transport (17 ; 18) sont positionnés suivant un espacement mutuel.

21. Dispositif selon l'une des revendications 12 à 20, **caractérisé en ce qu'**un élément de transport (19 ou 20) respectif d'un moyen de transport (17) et un élément de transport (21 ou 22) respectif de l'autre moyen de transport (18) sont disposés par paires, les éléments de transport (19, 21 ; 20, 22) disposés par paires étant alors positionnés suivant un espacement mutuel.

22. Dispositif selon l'une des revendications 12 à 21, **caractérisé en ce que** tous les éléments de transport (19 à 22) sont réalisés sous la forme de bandes transporteuses sans fin et à défilement continu.

23. Dispositif selon l'une des revendications 12 à 21, **caractérisé en ce que** tous les éléments de transport (19 à 22) sont réalisés sous la forme de courroies crantées.
